# EUROPEAN PATENT APPLICATION

(11) **EP 1 748 435 A2**
(43) Date of publication of application: **31.01.2007**
(21) Application number: 06117343.1
(22) Date of filing: 17.07.2006
(51) Int. Cl.: G11B 20/12, G11B 27/32

(54) **Recording signal processing**

(30) Priority: 27.07.2005 KR 2005068578
(71) Applicant: Samsung Electronics Co., Ltd., Suwon-si, Gyeonggi-Do (KR)
(72) Inventor: Hong, Jin-hyuck Hanshin Apt. 104-505, Incheon (KR); Nam, Kyung-chul Shinmyeong Apt. 203-1706, Suwon-si Gyeonggi-do (KR)
(74) Representative: Piotrowicz, Pawel Jan Andrzej

(57) **Abstract**

A recording signal processing apparatus recording signal processing apparatus includes a recording signal processing unit which is configured to process an video-audio signal and video-audio information having at least one of virtual channel information including first language information and program map information including second language information, and to generate a recording signal; and a controller which is configured to control the recording signal processing unit to include the first language information in the recording signal when the recording signal is generated. The control method includes receiving a video-audio signal and video-audio information having at least one of virtual channel information including first language information and program map information including second language information; processing the video-audio signal and the video-audio information; and generating a recording signal including the first language information.

## Description

The present invention relates to recording signal processing, particularly, but not exclusively to recording digital broadcast signals in a storage medium.

In general, digital broadcast signals received through a recording signal processing apparatus include image signals for displaying images on a display unit, sound signals for outputting sounds through a speaker, and video/audio information having at least one of a program and system information protocol (PSIP) based on the ATSC 65/B specification and program specification information (PSI) based on the ISO/IEC 13818-1 specification. The image signals and sound signals are generally called "video/audio signals".

When digital broadcast signals received through a recording signal processing apparatus are recorded in a predetermined storage medium through an interface, such as an IEEE 1394 interface, etc., the storage medium can store predetermined video/audio information as well as video/audio signals. The video/audio information can include data, such as a program association table (PAT) and a program map table (PMT) included in the PSI, a selection information table (SIT) obtained by recombining tables included in a PSIP, etc., according to the EIA 775.2 specification.

When the conventional recording signal processing apparatus performs a recording function, as described above, it stores video/audio information including a PMT and an SIT, together with video/audio signals. Here, the SIT does not include language information for identifying language types. Accordingly, if no language information is included in the PMT, the conventional recording signal processing apparatus cannot provide any language information for display when recording signals are reproduced.

The present invention seeks to provide a recording signal processing apparatus and a method of controlling a recording signal processing apparatus.

According to a first aspect of the present invention, there is provided a recording signal processing apparatus comprising: a recording signal processing unit processing a video/audio signal and video/audio information having at least one of virtual channel information including first language information and program map information including second language information, and generating a recording signal; and a controller controlling the recording signal processing unit to allow the first language information to be included in the recording signal when the recording signal is generated.

The recording signal may include at least one of system information and the program map information, and the controller may control the recording signal processing unit to allow the first language information to be included in at least one of the system information and the program map information.

The virtual channel information may include a virtual channel table (VCT), the program map information includes a program map table (PMT), and the system information includes a selection information table (SIT).

The first language information may include a language code of a descriptor contained in the VCT, and the controller may control the recording signal processing unit to transform a language descriptor contained in the PMT on the basis of the language code of the descriptor contained in the VCT.

The controller may control the recording signal processing unit to transform a descriptor contained in the SIT on the basis of a language code of a descriptor contained in the VCT.

The descriptor contained in the SIT may include at least one of a program information descriptor and an additional descriptor.

If the second language information is not used, the controller may control the recording signal processing unit to allow the first language information to be included in the recording signal.

The controller may control the recording signal processing unit to allow the second language information to be included in the system information.

The first language information and the second language information may include language information for identifying a language type.

The recording signal processing apparatus may further comprise a storage unit for storing the recording signal generated by the recording signal processing unit.

The recording signal may be stored in the storage unit through an IEEE 1394 interface.

The recording signal processing apparatus may further comprise a signal receiver for receiving a broadcast signal including the video/audio signal and the video/audio information.

According to a second aspect of the present invention, there is provided a recording signal processing apparatus comprising: a recording signal processor processing a video/audio signal and video/audio information having at least one of virtual channel information including first language information and program map information including second language information, and generating a recording signal; and a controller controlling the recording signal processing unit to allow the second language information to be included in system information of the recording signal when the recording signal is generated.

The virtual channel information may include a virtual channel table (VCT), the program map information includes a program map table (PMT), and the system information includes a selection information table (SIT).

The first language information and the second language information may include language information for identifying a language type.

The recording signal processing apparatus may further comprise a storage unit for storing the recording signal generated by the recording signal processing unit.

The recording signal may be stored in the storage unit through an IEEE 1395 interface.

The recording signal processing apparatus may further comprise a signal receiver for receiving a broadcast signal including a video/audio signal and video/audio information.

According to a third aspect of the present invention, there is provided a control method of a recording signal processing apparatus, comprising: receiving a video/audio signal and video/audio information having at least one of virtual channel information including first language information and program map information including second language information; and processing the video/audio signal and the video/audio information and to generate a recording signal including the first language information.

The recording signal may include at least one of system information and the program map information, and, in the generating of the recording signal, the first language information may be included in at least one of the system information and the program map information.

The virtual channel information may include a virtual channel table (VCT), the program map information may include a program map table (PMT), and the system information may include a selection information table (SIT).

The first language information may include a language code of a descriptor contained in the VCT, and the generating of the recording signal may comprise transforming a language descriptor contained in the PMT on the basis of a language code of a descriptor contained in the VCT.

The first language information may include a language code of a descriptor contained in the VCT, and the generating of the recording signal may comprise transforming a descriptor contained in the SIT on the basis of a language code of a descriptor contained in the VCT.

In the generating of the recording signal, the first language information may be included in the recording signal if the second language information is not used.

The control method may further comprise allowing the second language information to be included in the system information.

The video/audio signal and the video/audio information may be included in a broadcast signal and received through the broadcast signal.

According to a fourth aspect of the present invention, there is provided a control method of a recording signal processing apparatus, comprising: receiving a video/audio signal and video/audio information having at least one of virtual channel information including first language information and program map information including second language information; and processing the video/audio signal and the video/audio information and to generate a recording signal having system information including the second language information.

The virtual channel information may include a virtual channel table (VCT), the program map information includes a program map table (PMT), and the system information includes a selection information table (SIT).

The video/audio signal and the video/audio information may be included in a broadcast signal and received through the broadcast signal.

Embodiments of the present invention will now be described, by way of example, with reference to the accompanying drawings in which:
Figure 1 is a control block diagram of an embodiment of a recording signal processing apparatus according to the present invention;
Figure 2 is a signal flow diagram of an embodiment of a recording signal processing unit according to the present invention;
Figure 3 is a flowchart illustrating a first embodiment of a control method of the recording signal processing apparatus in accordance with the present invention;
Figure 4 is a flowchart illustrating a second embodiment of a control method of the recording signal processing apparatus in accordance with the present invention; and
Figure 5 is a flowchart illustrating a third embodiment of a control method of the recording signal processing apparatus in accordance with the present invention.

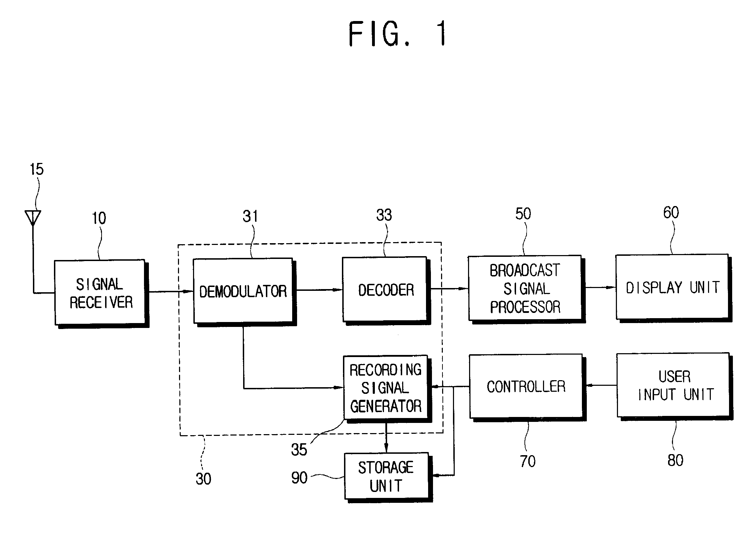

Figure 1 is a control block diagram of an embodiment of a recording signal processing apparatus according to the present invention.

Referring to Figure 1, the recording signal processing apparatus includes a recording signal processing unit 30 for generating recording signals and a controller 70 for controlling the recording signal processing unit 30. Broadcast signals may include video/audio signals and video/audio information having at least one of virtual channel information including first language information and program map information including second language information. The virtual channel information may include a virtual channel table (VCT) of a program and system information protocol (PSIP). In this example, it is assumed that the virtual channel information is a VCT. Also, the program map information may include a program map table (PMT) of program specification information (PSI). In the present exemplary embodiment, it is assumed that the program map information is a PMT.

Also, the recording signal processing apparatus may further include a signal receiver 10 for receiving digital broadcast signals, a display unit 60 for displaying images according to the digital broadcast signals, a broadcast signal processor 50 for processing the digital broadcast signals to be displayed on the display unit 60, and a user input unit 80 for allowing users to select a recording function.

The video/audio signals and video/audio information of the digital broadcast signals are subjected to time-division multiplexing and then transmitted in a format of a packetized transport stream.

The signal receiver 10 receives a broadcast signal including a video/audio signal and video/audio information through an antenna 15, and includes a tuner (not shown) and a demodulator (not shown). The video/audio information can include at least one of: a PSIP containing a system time table (STT), a master guide table (MGT), a rating region table (RRT), an event information table (EIT), an extended text table (ETT), a VCT including first language information; a PSI containing a program association table (PAT), a conditional access table (CAT), a network information table (NIT), and a PMT including second language information.

The tuner tunes the received broadcast signal to a broadcast signal corresponding to a specific channel selected according to a tuning control signal received from the controller 70 which will be described later. Then, the demodulator performs demodulation and error-correction on the broadcast signal of the specific channel tuned by the tuner, and outputs the resultant broadcast signal in a format of a transport stream.

The recording signal processing unit 30 can transform and output the broadcast signal received from the signal receiver 10 to the broadcast signal processor 50. If the recording function is performed, the recording signal processing unit 30 extracts a broadcast signal required for recording from received broadcast signals, and generates a recording signal with a format of a transport stream.

The recording signal processing unit 30 may include a demodulator 31, a decoder 33, and a recording signal generator 35.

The demodulator 31 divides the broadcast signal with the format of the transport stream into a video/audio signal and video/audio information. The decoder 33 decodes the video/audio signal and video/audio information received from the demodulator 31 to output to the broadcast signal processor 50.

For example, when a channel including first, second, third and fourth virtual channels is received through the tuner, if a recording function for a recording target channel is selected through the user input unit 80, the recording signal processing unit 30 extracts a video/audio signal and video/audio information corresponding to the recording target channel and generates a recording signal.

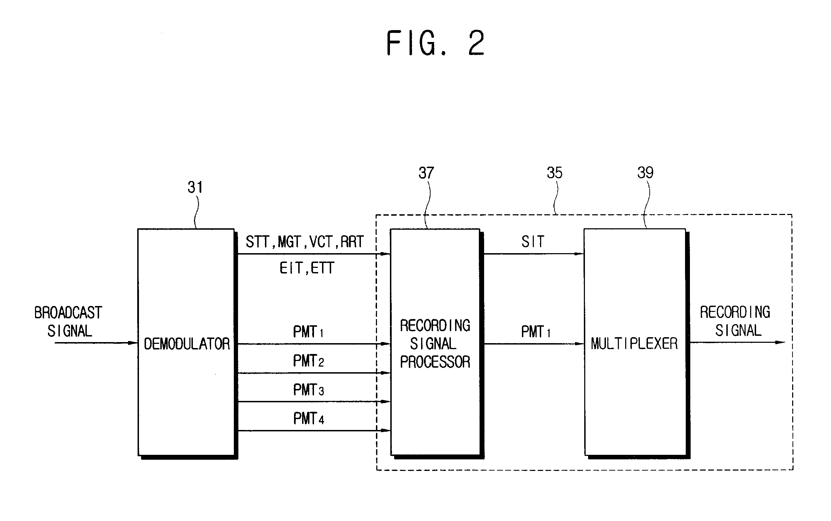

In detail, if the first channel is selected as a recording target channel, the recording signal processing unit 30 generates a recording signal on the basis of a video/audio signal corresponding to the first channel. Then, the recording signal processing unit 30 adds to the recording signal a SIT obtained by extracting a part of information included in a PMT and a PSIP corresponding to the recording target channel from the received video/audio information and reconstructing the extracted information. Here, the recording signal processing unit 30 includes a recording signal processor 37 for generating the SIT and a multiplexer 39 for multiplexing the video/audio signal (see Fig. 2) and data such as a PMT and a SIT, and generates and outputs the recording signal to a storage unit 90 which will be described later.

The broadcast signal processor 50 processes the broadcast signal decoded by the decoder 33 and outputs the processed broadcast signal to the display unit 60. Here, the broadcast signal processor 50 includes a scaler (not shown) for converting the broadcast signal into a format suitable to a vertical frequency, resolution, a screen ratio, etc. corresponding to the output specification of the display unit 60.

The display unit 60 may be implemented by various display modules, such as a digital light processing (DLP) display, a liquid crystal display (LCD), a plasma display panel (PDP), or other known display in the art.

The controller 70 controls the internal devices described above to allow the broadcast signal to be displayed on the display unit 60. Also, the controller 70 can control the recording signal processing unit 30 to allow at least one of the first language information and the second language information to be included in the recording signal when a recording function is performed.

In one embodiment, the controller 70 determines which one of the first language information and the second language information should be used for display on the display unit 60. That is, when a recording target channel is displayed on the display unit 60, the controller 70 determines which one of the first language information and the second language information should be used for display on the display unit 60.

When a reproduction target channel is reproduced, the controller 70 can determine which one of the first language information and the second language information should be used for display on the display unit 60, depending on predetermined priorities assigned to the first language information and the second language information. If the controller 70 determines that the second language information should be used for display on the display unit 60, the controller 70 controls the recording signal processing unit 30 to allow the recording signal to include the second language information.

On the other hand, if the controller 70 determines that the first language information should be used for display on the display unit 60, the controller 70 transforms the second language information on the basis of the first language information. Then, the controller 70 controls the recording signal processing unit 30 to allow the transformed second language information to be included in the recording signal.

Here, the first language information may be included in a language code "ISO_639_language_code" contained in a "service_location_descriptor" of a VCT, and the second language information may be included in a language descriptor "ISO_639_language_descriptor" of a PMT. In order to transform the second language information, after the first language information included in the language code "ISO_639_language_code" of the VCT is copied, the second language information included in the language descriptor "ISO_639_language_descriptor" of the PMT is transformed on the basis of the copied first language information.

Also, the controller 70 controls the recording signal processing unit 30 to allow the first language information to be included in the PMT, regardless of which one of the first and second language information should be used for display.

According to a second exemplary embodiment of the present invention, the controller 70 controls the recording signal processing unit 30 to allow the first language information to be included in the recording signal.

In detail, the controller 70 controls the recording signal processing unit 30 to allow the SIT included in the recording signal to include the first language information contained in the VCT. That is, the controller 70 causes the SIT to include the language code "ISO_639_language_code" contained in the "service_location_descriptor" of the VCT. Here, it is advantageous that the language code "ISO_639_language_code" of the VCT is contained in a program information descriptor "program_info_descriptor" or an additional descriptor "additional_descriptor" of the SIT. Alternately, the language code "ISO_639_language_code" may be provided as a separate table. If the first language information is included in the SIT, the recording signal includes the first language information contained in the SIT and the second language information included in the PMT. In this case, although a broadcast signal received through the signal receiver 10 includes one of the first and second language information, the corresponding recording signal includes the first or second language information included in the broadcast signal. Accordingly, when the recording signal is reproduced, proper language information can be used for display on the display unit 60.

Here, the first and second language information can include language information for identifying the type of a language contained in the language code "ISO_639_language_code" and the language descriptor
"ISO_639_language_descriptor".

In one embodiment, the controller 70 controls the recording signal processing unit 30 to allow the second language information which is included in the PMT to be included in the SIT.

In detail, the controller 70 controls the recording signal processing unit 30 to allow the second language information contained in the language descriptor "ISO_639_language_descriptor" of the PMT to be included in the program information descriptor "program_info_descriptor" or the additional descriptor "additional_descriptor" of the SIT, or in a separate table. The second language information may be included in the recording signal in such a manner that the second language information is contained in at least one of the SIT and PMT. Accordingly, when the recording signal is reproduced, language information based on the second language information can be used for display on the display unit 60.

If video/audio information received through the signal receiver 10 includes both a VCT including the first language information and a PMT including the second language information, and language information which should be used for display on the display unit 60 is the first language information, the controller 70 controls the recording signal processing unit 30 to allow the first language information to be included in at least one of the SIT and PMT. Meanwhile, if language information which should be used for display on the display unit 60 is the second language information, the controller 70 controls the recording signal processing unit 30 to allow the second language information to be included in at least one of the SIT and PMT.

If the video/audio information received through the signal receiver 10 includes both the VCT including the first language information and the PMT including the second language information, the controller 70 controls the recording signal processing unit 30, to allow the first language information to be included in both the PMT and SIT, to allow the first language information to be included in one of the PMT and SIT and the second language information to be included in the other of the PMT and SIT, or to allow the second language information to be included in both the PMT and SIT, regardless of language information which should be used for display on the display unit 60.

Figure 2 is a signal flow diagram of the recording signal processing unit 30(Figure 1).

Referring to Figure 2, the recording signal processing unit 30 (Figure 2) processes a broadcast signal to generate a recording signal. If a broadcast signal based on the Moving Picture Experts Group 2-Transpoxt Stream (MPEG 2-TS) is applied to a demodulator 31 of the recording signal processing unit 30, the demodulator 31 extracts a video/audio signal and video/audio information from the broadcast signal and applies them to a recording signal processor 37.

The recording signal processor 37 reads tables of a PSIP from the video/audio information extracted by the demodulator 31, recombines the tables, and thus creates a SIT including a channel number, a program title, a program time, a program description, and other such information known in the art, corresponding to a recorded channel. If a signal receiver 10 (see Figure 1) receives first, second, third and fourth channels and the first channel is recorded, the recording signal processor 37 extracts only a program map table PMT1 among program map tables PMT1, PMT2, PMT3, and PMT4 corresponding to the respective first, second, third and fourth channels.

A multiplexer 39 multiplexes the SIT and PMT1 received from the recording signal processor 37 with the video/audio signal to generate a recording signal.

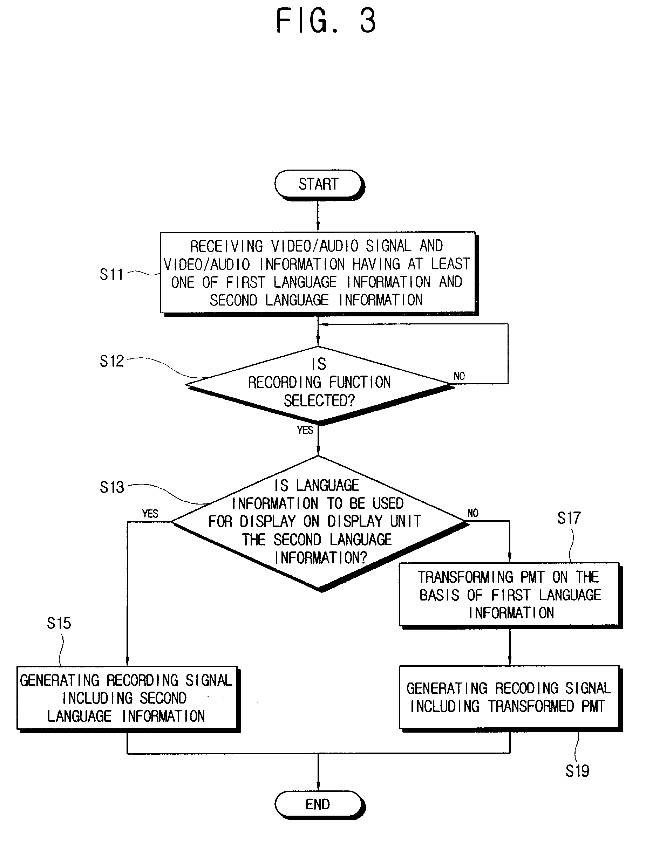

Figure 3 is a flowchart illustrating a first control method of the recording signal processing apparatus.

Referring to Figures 1, 2, and 3, the recording signal processing apparatus receives a broadcast signal including a video/audio signal and video/audio information having at least one of a VCT including first language information and a PMT including second language information at operation S11. If a recording function is selected at operation S12, the controller 70 extracts a video/audio signal and video/audio information corresponding to a recording target channel to generate a recording signal, in order to record a broadcast signal corresponding to the recording target channel.

When the recoding target channel is displayed on the display unit 60, the controller 70 determines whether or not the language information to be used for display on the display unit 60 is the second language information at operation S13. If the controller 70 determines that the language information to be used for display on the display unit 60 is the second language information, the controller 70 controls the recording signal processing unit 30 to allow the second language information to be included in the recording signal at operation S15. On the other hand, when the recording target channel is displayed on the display unit 60, if the controller 70 determines that the language information to be used for display on the display unit 60 is not the second language information at operation S13, the controller 70 transforms the second language information on the basis of the first language information at operation S17. Then, the controller 70 controls the recording signal processing unit 30 to allow the transformed second language information to be included in the recording signal at operation S19. A method of transforming the second language information on the basis of the first language information has been described above.

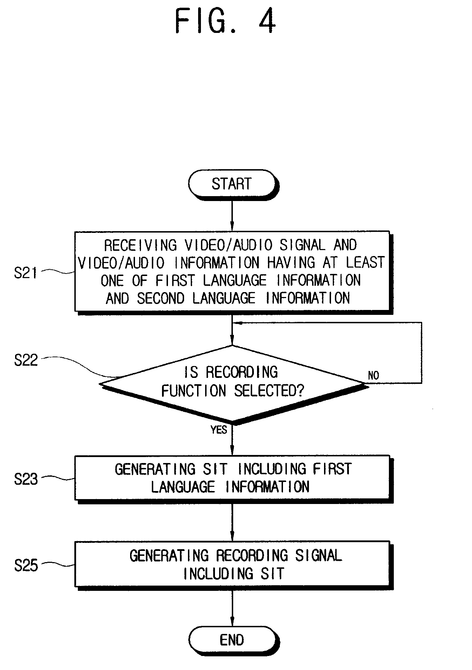

Figure 4 is a flowchart illustrating a second control method of the recording signal processing apparatus.

Referring to Figures 1, 2 and 4, the recording signal processing apparatus receives a broadcast signal including a video/audio signal and video/audio information having at least one of a VCT including first language information and a PMT including second language information at operation S21. If a recording function is selected at operation S22, the controller 70 extracts a video/audio signal and video/audio information corresponding to a recording target channel from the broadcast signal and generates a recording signal, in order to record a broadcast signal corresponding to the recording target channel.

The controller 70 controls the recording signal processing unit 30 to allow a SIT to include the first language information included in the VCT at operation S23. Then, the controller 70 controls the recording signal processing unit 30 to generate a recording signal including the SIT having the first language information at operation S25.

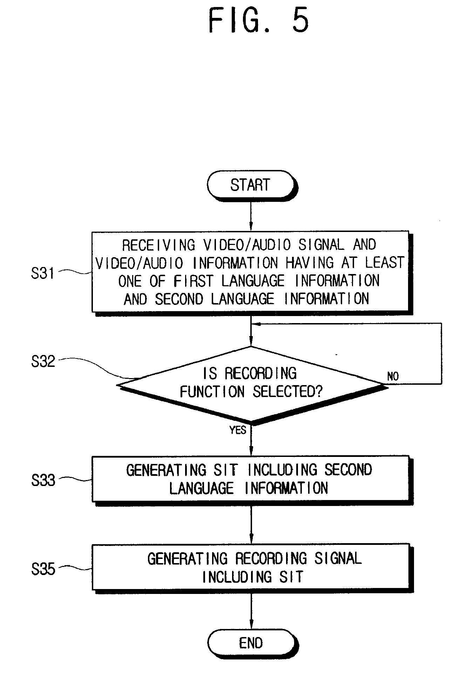

Figure 5 is a flowchart illustrating a third control method of the recording signal processing apparatus.

Referring to Figures 1, 2, and 5, the recording signal processing apparatus receives a broadcast signal including a video/audio signal and video/audio information having at least one of a VCT including first language information and a PMT including second language information at operation S31. If a recording function is selected at operation S32, the controller 70 extracts a video/audio signal and video/audio information corresponding to a recording target channel from the broadcast signal and generates a recording signal, in order to record a broadcast signal corresponding to the recording target channel.

The controller 70 controls the recording signal processing unit 30 to allow a SIT to include the second language information included in the PMT at operation S33. Then, the controller 70 controls the recording signal processing unit 30 to generate a recording signal including the SIT having the second language information at operation S35.

The recording signal processing apparatus may further include a storage unit 90 for storing the recording signal generated by the recording signal processing unit 30. The storage unit 90, which can store digital broadcast signals, may be a hard disk drive (HDD), an external personal video recorder (PVR), a digital video cassette recorder (DVCR), or other storage device known in the art. The storage unit 90 communicates with the recording signal generator 35 through the IEEE 1394 interface. However, various interfaces allowing communication between the storage unit 90 for storing digital broadcast signals and the recording signal processing unit 30 may be used.

The display unit 60 can be installed in the recording signal processing apparatus or can be provided as a separate external device.

For example, if the recording signal processing apparatus according to the present invention is a set-top box and is separated from a digital TV, the recording signal processing apparatus does not include the display unit 60. However, if the recording signal processing apparatus according to the present invention is a digital TV, the recording signal processing apparatus includes the display unit 60.

Also, the recording signal processing apparatus may be a digital video disk (DVD), or other device known in the art which is capable of generating recording signals.

As described above, in a recording signal processing apparatus and a control method thereof, since language information contained in at least one of program map information and virtual channel information is recorded, it is possible to prevent language information from being not provided or from being improperly provided for display when recording signals are reproduced.

Although embodiments of the present invention have been shown and described, it will be appreciated by those skilled in the art that changes may be made to these embodiments without departing from the scope of the invention defined in the appended claims.

## Claims

1. A recording signal processing apparatus comprising:
a recording signal processing unit which is configured to process a video and audio signal and video and audio information having at least one of virtual channel information including first language information and program map information including second language information, and to generate a recording signal; and
a controller which is configured to control the recording signal processing unit to include the first or second language information in the recording signal when the recording signal is generated.

2. A recording signal processing apparatus according to claim 1, wherein the recording signal includes at least one of system information and the program map information, and the controller controls the recording signal processing unit to include the first language information in at least one of the system information and the program map information.

3. A recording signal processing apparatus according to claim 1 or 2, wherein the virtual channel information includes a virtual channel table (VCT), the program map information includes a program map table (PMT), and the system information includes a selection information table (SIT).

4. A recording signal processing apparatus according to claim 3, wherein the first language information includes a language code of a descriptor contained in the VCT, and the controller controls the recording signal processing unit to transform a language descriptor contained in the PMT on the basis of the language code of the descriptor contained in the VCT.

5. A recording signal processing apparatus according to claim 3, wherein the controller controls the recording signal processing unit to transform a descriptor contained in the SIT on the basis of a language code of a descriptor contained in the VCT.

6. A recording signal processing apparatus according to claim 5, wherein the descriptor contained in the SIT includes at least one of a program information descriptor and an additional descriptor.

7. A recording signal processing apparatus according to claim 5, wherein, if the second language information is not used, the controller controls the recording signal processing unit to include the first language information in the recording signal.

8. A recording signal processing apparatus according to claim 2, wherein the controller controls the recording signal processing unit to include the second or first language information in the system information.

9. A recording signal processing apparatus according toany preceding claim, wherein the first language information and the second language information include language information for identifying a language type.

10. A recording signal processing apparatus according toany preceding claim, further comprising a storage unit which is configured to store the recording signal generated by the recording signal processing unit.

11. A recording signal processing apparatus according to claim 10, wherein the recording signal is stored in the storage unit through an IEEE 1394 interface.

12. A recording signal processing apparatus according toany preceding claim, further comprising a signal receiver which is configured to receive a broadcast signal including the video and audio signal and the video and audio information.

13. A method of controlling a recording signal processing apparatus, the method comprising:
receiving a video and audio signal and video and audio information having at least one of virtual channel information including first language information and program map information including second language information;
processing the video and audio signal and the video and audio information; and
generating a recording signal including the first or second language information.

14. A method according to claim 13, wherein generating the recording signal including the first or second language information comprises generating the recording signal including the first language information.

15. A method according to claim 13 or 14, wherein the recording signal includes at least one of system information and the program map information, and wherein, in the generating the recording signal, the first language information is included in at least one of the system information and the program map information.

16. A method according to claim13, 14 or 15, wherein the virtual channel information includes a virtual channel table (VCT), the program map information includes a program map table (PMT), and the system information includes a selection information table (SIT).

17. A method according to claim 16, wherein the first language information includes a language code of a descriptor contained in the VCT, and wherein the generating the recording signal comprises transforming a language descriptor contained in the PMT on the basis of a language code of a descriptor contained in the VCT.

18. A method according to claim 17, wherein the first language information includes a language code of a descriptor contained in the VCT, and wherein the generating the recording signal comprises transforming a descriptor contained in the SIT on the basis of a language code of a descriptor contained in the VCT.

19. A method according to claim 18, wherein, in the generating the recording signal, the first language information is included in the recording signal if the second language information is not used.

20. A method according to any one of claims 13 to 19, further comprising including the second language information in the system information.

21. A control method according toany one of claims 13 to 19, wherein the video and audio signal and the video and audio information are included in a broadcast signal and received through the broadcast signal.
